# FASCICULE DE BREVET EUROPEEN

(11) **EP 4 072 943 B1**
(45) Date de publication et mention de la délivrance du brevet: **29.11.2023**
(21) Numéro de dépôt: 20781383.3
(22) Date de dépôt: 05.10.2020
(51) Int. Cl.: H01M 8/04111, B64D 27/24, B64D 27/02, H01M 8/00, B64D 29/00, B64D 33/02, B64D 41/00

(54) **SYSTEME DE PROPULSION POUR UN AERONEF, LEDIT SYSTEME DE PROPULSION COMPORTANT UNE PILE A COMBUSTIBLE**
ANTRIEBSSYSTEM FÜR EIN FLUGZEUG, WOBEI DAS ANTRIEBSSYSTEM EINE BRENNSTOFFZELLE UMFASST
PROPULSION SYSTEM FOR AN AIRCRAFT, SAID PROPULSION SYSTEM COMPRISING A FUEL CELL

(30) Priorité: 09.12.2019 FR 1913969
(43) Date de publication de la demande: 19.10.2022
(73) Titulaire: Airbus (S.A.S.), 31700 Blagnac (FR)
(72) Inventeur: KIERBEL, Daniel, 31700 BLAGNAC (FR)
(74) Mandataire: Jardel, Marc Henry Philippe
(86) Numéro de dépôt international: PCT/EP2020/077849
(87) Numéro de publication internationale: WO 2021/115660

(56) Documents cités:
- EP-A1- 1 641 064
- CN-A- 107 264 792
- US-A1- 2017 240 291

## Description

### DOMAINE TECHNIQUE

La présente invention concerne un système de propulsion à hélice pour un aéronef, ledit système de propulsion à hélice comportant une pile à combustible, ainsi qu'un aéronef comportant au moins un tel système de propulsion.

### ETAT DE LA TECHNIQUE ANTERIEURE

Afin de se déplacer, un aéronef comporte un système de propulsion comportant un moteur et une hélice. Le moteur génère un mouvement rotatif qui est transmis à l'hélice.

Il est connu d'utiliser un moteur thermique afin de mettre en mouvement l'hélice. Un tel moteur thermique utilise généralement du kérosène. Il est également connu d'utiliser un moteur électrique afin de mettre en mouvement l'hélice. L'alimentation en courant électrique du moteur électrique s'effectue à partir d'un générateur électrique qui est disposé à distance du moteur électrique, ce qui nécessite la mise en place de conducteurs électriques relativement longs entre le générateur électrique et le moteur électrique.

La tension du courant qui circule dans ces conducteurs électriques est relativement élevée ce qui génère de fortes températures dans les conducteurs électriques qui doivent alors être de gros diamètre ou qui doivent être refroidis.

Il est également connu d'utiliser des piles à combustible pour générer de l'électricité et alimenter un moteur électrique. Avec cette technologie, il est nécessaire d'alimenter la pile à combustible avec du dioxygène et pour ce faire, il est usuel de mettre en place des conduites de dioxygène qui guide le dioxygène vers la pile à combustible.

Le document US2017/240291 décrit un empilement de piles à combustible utilisée comme source d'alimentation d'un moteur d'un multicoptère comportant une pluralité de bras et de pales rotatives, dans lequel l'empilement de piles à combustible est monté sur un bras dans une zone affectée par une poussée de la pale rotative.

Il est nécessaire de trouver un système de propulsion utilisant des moteurs électriques et dont l'alimentation électrique s'effectue de la manière la plus intégrée possible.

### EXPOSE DE L'INVENTION

Un objet de la présente invention est de proposer un système de propulsion à hélice comportant une pile à combustible dont l'architecture lui permet une meilleure intégration en limitant la longueur des conducteurs électriques entre le moteur électrique et la pile à combustible et le nombre de conduites guidant le dioxygène vers la pile à combustible.

A cet effet, est proposé un système de propulsion pour un aéronef, le système de propulsion comportant :
- une nacelle présentant un canal d'air annulaire autour d'une direction longitudinale X et débouchant à l'avant au niveau d'une bouche d'entrée et à l'arrière par une bouche d'éjection,
- un moteur électrique fixé à l'intérieur de la nacelle et comportant une sortie sur laquelle est monté un arbre parallèle à la direction longitudinale X, une première borne électrique, et une deuxième borne électrique,
- une hélice disposée en avant par rapport à la bouche d'entrée et entraînée en rotation par ledit arbre,
- une pile à combustible comportant :
   - un noyau autour de la direction longitudinale X et en dehors du canal d'air,
- des canaux ouverts autour du noyau, où chaque canal ouvert présente une entrée ouverte dans le canal d'air et une sortie ouverte dans le canal d'air et en aval de l'entrée ouverte par rapport au sens de l'écoulement de l'air dans le canal d'air,
- pour chaque canal ouvert, une chambre à combustible alimentée en combustible,
- pour chaque paire constituée d'un canal ouvert et d'une chambre à combustible, un électrolyte entre le canal ouvert et la chambre à combustible,
- entre chaque canal ouvert et l'électrolyte voisin, une cathode,
- entre chaque chambre à combustible et l'électrolyte voisin, une anode,

où les anodes sont électriquement reliées à la première borne électrique et où les cathodes sont électriquement reliées à la deuxième borne électrique,
où chaque canal ouvert présente une surface de l'entrée qui est inférieure à la surface d'une zone intermédiaire entre l'entrée et la sortie, et où la surface de la sortie est inférieure à la surface de la zone intermédiaire.

Un tel système de propulsion permet donc d'avoir la pile à combustible qui est proche du moteur électrique, réduisant d'autant les longueurs des conducteurs électriques entre eux et qui utilise le dioxygène de l'air qui circule dans le système de propulsion.

Selon un mode de réalisation particulier, les canaux ouverts sont des canaux coaxiaux les uns aux autres autour de la direction longitudinale X, entre deux canaux ouverts consécutifs, la pile à combustible comporte une chambre à combustible annulaire, et entre la chambre à combustible et chaque canal ouvert, la pile à combustible comporte un électrolyte.

Selon un autre mode de réalisation particulier, les canaux ouverts sont disposés les uns à côté des autres et répartis angulairement autour de la direction longitudinale X, autour de chaque canal ouvert, la pile à combustible comporte un électrolyte annulaire autour de l'axe du canal ouvert et autour de l'électrolyte, une chambre à combustible annulaire autour de l'axe du canal ouvert.

Avantageusement, le système de propulsion comporte dans le canal d'air au niveau de la bouche d'entrée, un compresseur entraîné en rotation autour de la direction longitudinale X par l'arbre.

Avantageusement, le système de propulsion comporte dans le canal d'air au niveau de la bouche d'éjection, une turbine entraînée en rotation autour de la direction longitudinale X par l'arbre.

Avantageusement, le système de propulsion comporte au moins une chambre de combustion qui présente une entrée fluidiquement connectée à au moins une sortie d'une chambre à combustible et une sortie fluidiquement connectée au canal d'air en amont de la turbine.

Avantageusement, le moteur électrique est équipé d'une boîte de vitesse intercalée entre la sortie du moteur et l'arbre.

Avantageusement, l'arbre est constitué d'un arbre amont solidaire de l'hélice et d'un arbre aval solidaire du moteur électrique et le système de propulsion comporte un dispositif de débrayage monté entre l'arbre aval et l'arbre amont.

Avantageusement, le système de propulsion comporte une couche thermiquement isolante qui est disposée entre la pile à combustible et le moteur électrique.

L'invention propose également un aéronef comportant un réservoir de combustible et un système de propulsion selon l'une des variantes précédentes, où l'entrée de chaque chambre à combustible est fluidiquement connectée par une canalisation d'apport au réservoir.

Avantageusement, la canalisation d'apport est en contact avec le moteur électrique.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de face d'un aéronef comportant un système de propulsion selon l'invention,
[Fig. 2] est une vue de côté et en coupe d'un système de propulsion selon un premier mode de réalisation de l'invention,
[Fig. 3] est une vue partielle de face d'une pile à combustible selon un premier arrangement,
[Fig. 4] est une vue partielle de face d'une pile à combustible selon un deuxième arrangement,
[Fig. 5] est une vue en coupe de la pile à combustible selon la ligne V-V de la Fig. 3,
[Fig. 6] est une vue en coupe de la pile à combustible selon la ligne VI-VI de la Fig. 4,
[Fig. 7] est une vue similaire à celle de la Fig. 2 pour un système de propulsion selon un deuxième mode de réalisation de l'invention,
[Fig. 8] est une vue similaire à celle de la Fig. 2 pour un système de propulsion selon un troisième mode de réalisation de l'invention, et
[Fig. 9] est une vue similaire à celle de la Fig. 2 pour un système de propulsion selon un quatrième mode de réalisation de l'invention.

### EXPOSE DETAILLE DE MODES DE REALISATION

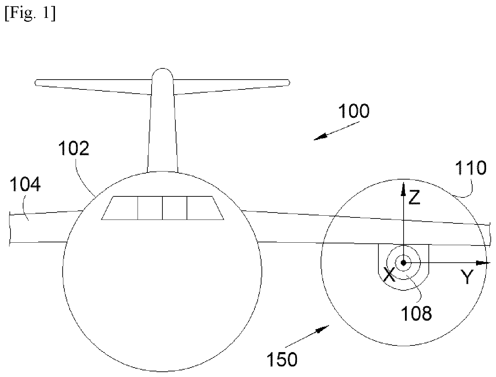

Dans la description qui suit, les termes relatifs à une position sont pris en référence à un aéronef en position d'avancement, c'est-à-dire comme il est représenté sur la Fig. 1 où la direction de l'axe X montre la direction d'avancement de l'aéronef

La Fig. 1 montre un aéronef 100 qui présente un fuselage 102 de part et d'autre duquel est fixée une aile 104. Sous chaque aile 104 est fixé au moins un système de propulsion à hélice 150. Dans le mode de réalisation de l'invention présenté à la Fig. 1, il y a un système de propulsion 150 par aile 104.

Dans la description qui suit, et par convention, on appelle X la direction longitudinale du système de propulsion 150 orientée positivement dans le sens d'avancement de l'aéronef 100, on appelle Y la direction transversale du système de propulsion 150 qui est horizontale lorsque l'aéronef est au sol, et Z la direction verticale ou hauteur verticale lorsque l'aéronef est au sol, ces trois directions X, Y et Z étant orthogonales entre elles.

Le système de propulsion 150 comporte une hélice 110 et un moteur électrique 108 qui est fixé à l'aile 104 et qui présente une sortie sur laquelle est monté un arbre qui entraîne l'hélice 110 en rotation lorsque le moteur électrique 108 fonctionne. Les axes de rotation de l'arbre et de l'hélice 110 sont parallèles à la direction longitudinale X et dans les modes de réalisation présentés sur les différentes Figs., les axes de rotation sont confondus avec la direction longitudinale X.

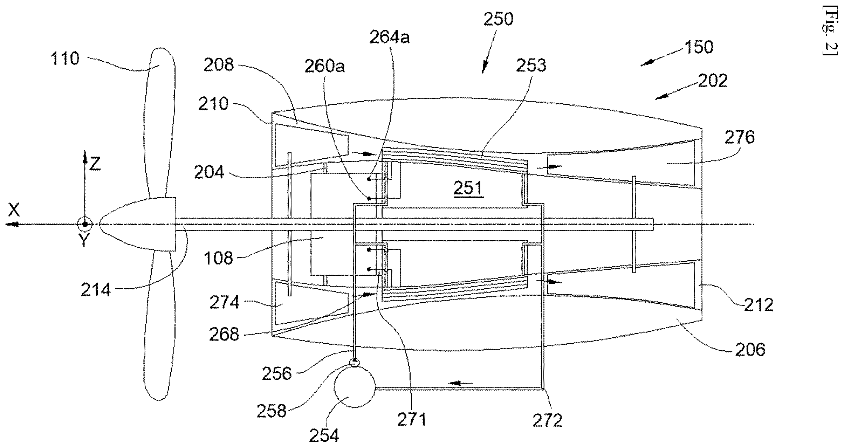

La Fig. 2 montre le système de propulsion 150 selon un premier mode de réalisation de l'invention. Le système de propulsion 150 comporte une nacelle 202 qui présente une structure 204 et des capots extérieurs 206 qui sont fixés sur la structure 204 et qui forment une surface extérieure aérodynamique. La nacelle 202 présente également un canal d'air 208 qui est annulaire autour de la direction longitudinale X et qui débouche à l'avant au niveau d'une bouche d'entrée 210 et à l'arrière par une bouche d'éjection 212.

Le moteur électrique 108 est fixé à la structure 204 à l'intérieur de la nacelle 202 et projette son arbre 214 vers l'avant et l'hélice 110 est entraînée en rotation par l'arbre 214 et disposée en avant par rapport à la bouche d'entrée 210.

Le système de propulsion 150 comporte une pile à combustible 250 qui est une pile dans laquelle la génération d'une tension électrique se fait grâce à l'oxydation sur une électrode d'un combustible réducteur sous forme liquide ou gazeux, par exemple du dihydrogène et/ou du méthane, ou de l'ammoniaque, couplée à la réduction sur l'autre électrode d'un oxydant, par exemple le dioxygène de l'air.

La pile à combustible 250 est fixée à la structure 204 à l'intérieur de la nacelle 202 en arrière du moteur électrique 108 et elle est constituée de plusieurs couches annulaires autour de la direction longitudinale X.

La pile à combustible 250 comporte un noyau 251 qui est autour de la direction longitudinale X, ici autour de l'arbre 214, et en dehors du canal d'air 208, c'est-à-dire en deçà dudit canal d'air 208. Le noyau 251 assure la fixation de la pile à combustible 250 sur la structure 204.

La pile à combustible 250 comporte également des canaux ouverts 253, où chaque canal ouvert 253 présente une entrée ouverte dans le canal d'air 208 et une sortie ouverte dans le canal d'air 208 et en aval de l'entrée ouverte par rapport au sens de l'écoulement de l'air dans le canal d'air 208. Une telle répartition permet une meilleure répartition du dioxygène dans le canal ouvert 253.

Ainsi l'air qui pénètre par la bouche d'entrée 210 pénètre par une entrée dans un canal ouvert 253 et ressort dudit canal ouvert 253 par une sortie pour rejoindre le canal d'air 208 et la bouche d'éjection 212. Chaque entrée fait face au flux d'air (flèche 268) pénétrant par la bouche d'entrée 210.

Chaque entrée ouverte permet l'introduction de l'air chargé en dioxygène dans chaque canal ouvert 253 et la sortie ouverte permet l'évacuation de l'air appauvri en dioxygène et l'eau fabriquée par la pile à combustible 250.

Ainsi, l'apport en dioxygène pour la pile à combustible ne nécessite pas de conduite particulière. Chaque canal ouvert 253 constitue une chambre à dioxygène.

Ici, chaque entrée ouverte est orientée vers la bouche d'entrée 210 et chaque sortie ouverte est orientée vers la bouche d'éjection 212.

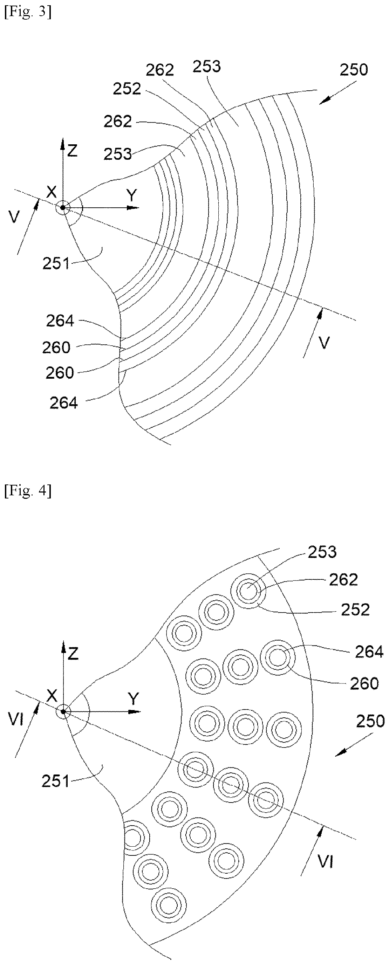

La Fig. 3 montre un premier arrangement dans lequel les canaux ouverts 253 sont des canaux coaxiaux les uns aux autres autour de la direction longitudinale X.

Entre deux canaux ouverts 253 consécutifs, la pile à combustible 250 comporte une chambre à combustible 252 annulaire autour de la direction longitudinale X, et entre la chambre à combustible 252 et chaque canal ouvert 253, la pile à combustible 250 comporte un électrolyte 262 annulaire autour de la direction longitudinale X.

La Fig. 4 montre un deuxième arrangement dans lequel les canaux ouverts 253 sont des canaux, ici cylindriques, disposés les uns à côté des autres et répartis angulairement autour de la direction longitudinale X.

Autour de chaque canal ouvert 253, la pile à combustible 250 comporte un électrolyte 262 annulaire autour de l'axe du canal ouvert 253 et autour de l'électrolyte 262, une chambre à combustible 252 annulaire autour de l'axe du canal ouvert 253. L'axe du canal ouvert 253 est ici parallèle à la direction longitudinale X.

Les parois séparant les différentes couches sont maintenues en position par exemple par des entretoises.

Entre chaque canal ouvert 253 et l'électrolyte 262 voisin, la pile à combustible 250 comporte une cathode 264, et entre chaque chambre à combustible 252 et l'électrolyte 262 voisin, la pile à combustible 250 comporte une anode 260.

Ainsi, d'une manière générale, pour chaque canal ouvert 253, la pile à combustible 250 comporte une chambre à combustible 252 alimentée en combustible, et pour chaque paire constituée d'un canal ouvert 253 et d'une chambre à combustible 252, un électrolyte 262 entre le canal ouvert 253 et la chambre à combustible 252.

Les anodes 260 sont électriquement reliées à une première électrode 260a électriquement connectée à une première borne électrique du moteur électrique 108 et les cathodes 264 sont électriquement reliées à une deuxième électrode 264a électriquement connectée à une deuxième borne électrique du moteur électrique 108.

Chaque chambre à combustible 252 comporte au moins une entrée par laquelle est introduit du combustible et au moins une sortie par laquelle est extrait le combustible non consommé. Afin de permettre une meilleure répartition du combustible dans la chambre à combustible 252, l'entrée ou les entrées et la sortie ou les sorties sont disposées à des extrémités différentes de la chambre à combustible 252. L'entrée de chaque chambre à combustible 252 est fluidiquement connectée par une canalisation d'apport 256 à un réservoir 254 contenant du combustible et présentant une pompe 258 destinée à entraîner le combustible dans la canalisation d'apport 256. Le réservoir 254 est installé dans l'aéronef 100 par exemple dans les ailes 104 ou dans le fuselage 102.

La canalisation d'apport 256 transporte du combustible à basse température et elle est en contact avec le moteur électrique 108 permettant de réduire la température de ce dernier et donc d'améliorer son efficacité.

Dans le mode de réalisation de la Fig. 2, la sortie de la chambre à combustible 252 est fluidiquement connectée par une canalisation de retour 272 au réservoir 254 afin de récupérer le combustible non consommé et le refaire circuler.

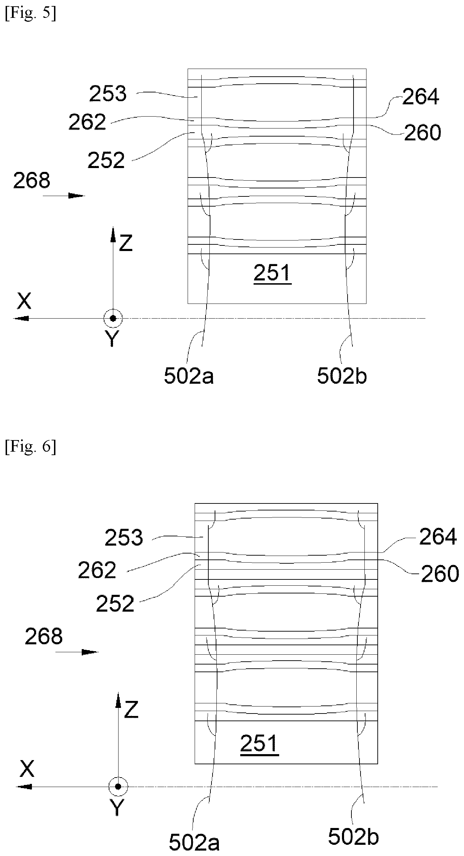

La Fig. 5 montre une coupe de la pile à combustible 250 de la Fig. 3.

La Fig. 6 montre une coupe de la pile à combustible 250 de la Fig. 4.

L'alimentation en combustible de chaque chambre à combustible 252 s'effectue par des canalisations d'arrivée 502a qui courent à l'intérieur de la pile à combustible 250 et qui sont fluidiquement connectées à la canalisation d'apport 256, et l'évacuation du combustible de chaque chambre à combustible 252 s'effectue par des canalisations de départ 502b qui courent à l'intérieur de la pile à combustible 250 et qui sont fluidiquement connectées à la canalisation de retour 272.

Dans le même temps, le refroidissement de la pile à combustible 250 est assuré, au moins en partie, par l'air traversant les canaux ouverts 253. Bien sûr, un système de refroidissement additionnel peut être installé et il peut prendre toutes formes connues par l'homme du métier, comme par exemple un échangeur de chaleur.

La pile à combustible 250 ainsi agencée permet d'utiliser l'air extérieur circulant dans le canal d'air 208 pour fonctionner et refroidir, et son intégration dans la nacelle 202 limite les conducteurs électriques entre le moteur électrique 108 et la pile à combustible 250.

Afin d'obtenir un bon échange thermique dans le canal ouvert 253 et un bon échange de dioxygène pour générer de l'électricité, chaque canal ouvert 253 présente une section évolutive le long du trajet de l'air dans ledit canal ouvert 253.

Comme le montrent la Fig. 5 et la Fig. 6, le canal ouvert 253 présente une surface de l'entrée qui est inférieure à la surface de la zone intermédiaire entre l'entrée et la sortie, et la surface de la sortie est inférieure à la surface de la zone intermédiaire. Chaque surface correspond à une section par un plan perpendiculaire à la direction longitudinale X.

Avec une telle installation, un effet Venturi est obtenu, ce qui permet de ralentir la vitesse du flux d'air dans la zone intermédiaire puis de l'accélérer lorsqu'il sort de la zone intermédiaire.

Selon un mode de réalisation particulier, la surface de l'entrée et la surface de la sortie sont dimensionnées pour obtenir une vitesse de Mach 0,6, et la surface de la zone intermédiaire est dimensionnée pour obtenir une vitesse de Mach 0,3.

Afin d'augmenter le débit d'air en entrée dans le canal d'air 208, le système de propulsion 150 comporte dans le canal d'air 208 au niveau de la bouche d'entrée 210, un compresseur 274 qui prend par exemple la forme d'ailettes entraînées en rotation autour de la direction longitudinale X par l'arbre 214.

Il est également possible de faire passer la canalisation d'apport 256 dans le canal d'air 208 au voisinage du compresseur 274 afin de refroidir l'air du canal d'air 208 et par conséquent le compresseur 274.

Afin d'augmenter le débit d'air en sortie du canal d'air 208 et d'augmenter l'évacuation de la chaleur, le système de propulsion 150 comporte dans le canal d'air 208 au niveau de la bouche d'éjection 212, une turbine 276 qui prend par exemple la forme d'ailettes entraînées en rotation autour de la direction longitudinale X par l'arbre 214. L'arbre 214 traverse alors la pile à combustible 250 de l'avant vers l'arrière.

La turbine 276 peut également permettre d'entraîner l'arbre 214 afin d'alléger le travail du moteur électrique 108 et donc d'abaisser les besoins électriques.

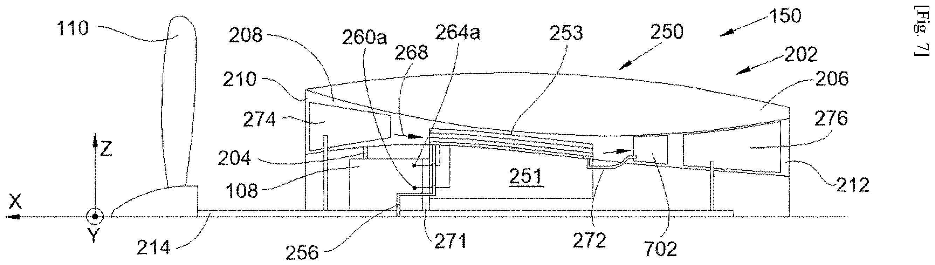

La Fig. 7 montre un deuxième mode de réalisation pour lequel le système de propulsion comporte au moins une chambre de combustion 702 qui présente une entrée fluidiquement connectée à au moins une sortie d'une chambre à combustible 252 par la canalisation de retour 272. Les gaz brûlés qui sont dans la chambre de combustion 702 s'écoulent ensuite par une sortie de la chambre de combustion 702 qui est fluidiquement connectée au canal d'air 208 en amont de la turbine 276. Un tel arrangement permet de brûler l'excédent de combustible, de générer une poussée supplémentaire et de produire de la chaleur pour la turbine 276. Il est également possible d'introduire du fuel dans la chambre de combustion 702 pour augmenter la combustion. Le système de propulsion 150 rejette alors que de l'eau et l'excès de chaleur.

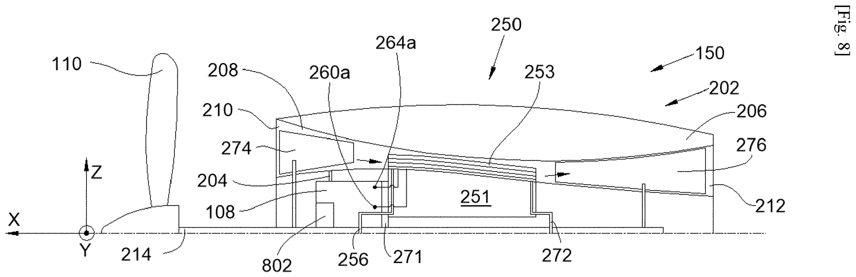

La Fig. 8 montre un troisième mode de réalisation pour lequel le moteur électrique 108 est équipé d'une boîte de vitesse 802 intercalée entre la sortie du moteur et l'arbre 214 afin de permettre des vitesses de rotation différentes du moteur et de l'arbre 214 et donc de l'hélice 110.

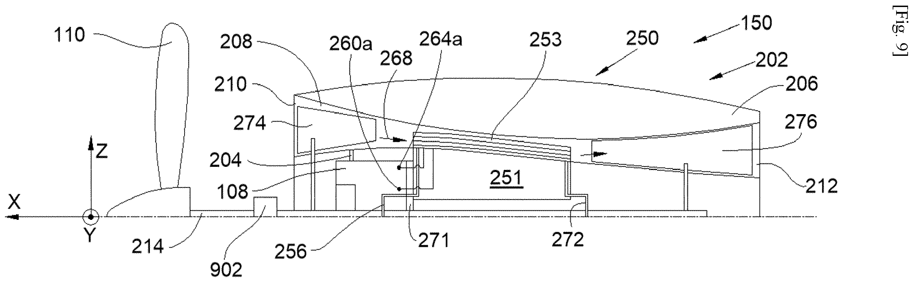

La Fig. 9 montre un quatrième mode de réalisation pour lequel l'arbre 214 est constitué d'un arbre amont solidaire de l'hélice 110 et d'un arbre aval solidaire du moteur électrique 108 et le système de propulsion 150 comporte un dispositif de débrayage 902 monté entre l'arbre aval et l'arbre amont afin de débrayer l'hélice 110.

Bien sûr, les différents modes de réalisation peuvent être combinés les uns avec les autres.

La pile à combustible 250 génère de fortes températures qui peuvent limiter les performances du moteur électrique 108. Afin de limiter cet impact, le système de propulsion 150 comporte une couche thermiquement isolante 271 qui est disposée entre la pile à combustible 250 et le moteur électrique 108. Un tel isolant thermique est par exemple du type aérogel de carbone.

Dans le mode de réalisation de la Fig. 4, les chambres de combustible 252 et les électrolytes 262 sont disposés autour du canal ouvert 253, mais il est également possible de disposer la chambre à combustible 252 à côté du canal ouvert 253 en disposant l'électrolyte 262 entre eux.

Le système de propulsion 150 et tous ses éléments sont préférentiellement contrôlés par un contrôleur du type FADEC pour notamment réguler le débit de combustible, la vitesse de rotation de l'arbre moteur, etc.

## Revendications

1. Système de propulsion (150) pour un aéronef (100), le système de propulsion (150) comportant :
- une nacelle (202) présentant un canal d'air (208) annulaire autour d'une direction longitudinale (X) et débouchant à l'avant au niveau d'une bouche d'entrée (210) et à l'arrière par une bouche d'éjection (212),
- un moteur électrique (108) fixé à l'intérieur de la nacelle (202) et comportant une sortie sur laquelle est monté un arbre (214) parallèle à la direction longitudinale (X), une première borne électrique, et une deuxième borne électrique,
- une hélice (110) disposée en avant par rapport à la bouche d'entrée (210) et entraînée en rotation par ledit arbre (214),
- une pile à combustible (250) comportant :
- un noyau (251) autour de la direction longitudinale (X) et en dehors du canal d'air (208),
- des canaux ouverts (253) autour du noyau (251), où chaque canal ouvert (253) présente une entrée ouverte dans le canal d'air (208) et une sortie ouverte dans le canal d'air (208) et en aval de l'entrée ouverte par rapport au sens de l'écoulement de l'air dans le canal d'air (208),
- pour chaque canal ouvert (253), une chambre à combustible (252) alimentée en combustible,
- pour chaque paire constituée d'un canal ouvert (253) et d'une chambre à combustible (252), un électrolyte (262) entre le canal ouvert (253) et la chambre à combustible (252),
- entre chaque canal ouvert (253) et l'électrolyte (262) voisin, une cathode (264),
- entre chaque chambre à combustible (252) et l'électrolyte (262) voisin, une anode (260), où les anodes (260) sont électriquement reliées à la première borne électrique et où les cathodes (264) sont électriquement reliées à la deuxième borne électrique,
où chaque canal ouvert (253) présente une surface de l'entrée qui est inférieure à la surface d'une zone intermédiaire entre l'entrée et la sortie, et où la surface de la sortie est inférieure à la surface de la zone intermédiaire.

2. Système de propulsion (150) selon la revendication 1, **caractérisé en ce que** les canaux ouverts (253) sont des canaux cylindriques coaxiaux les uns aux autres autour de la direction longitudinale X, **en ce qu'**entre deux canaux ouverts (253) consécutifs, la pile à combustible (150) comporte une chambre à combustible (252) annulaire, et **en ce qu'**entre la chambre à combustible (252) et chaque canal ouvert (253), la pile à combustible (250) comporte un électrolyte (262).

3. Système de propulsion (150) selon la revendication 1, **caractérisé en ce que** les canaux ouverts (253) sont disposés les uns à côté des autres et répartis angulairement autour de la direction longitudinale X, **en ce qu'**autour de chaque canal ouvert (253), la pile à combustible (250) comporte un électrolyte (262) annulaire autour de l'axe du canal ouvert (253) et autour de l'électrolyte (262), une chambre à combustible (252) annulaire autour de l'axe du canal ouvert (253).

4. Système de propulsion (150) selon l'une des revendications 1 à 3, **caractérisé en ce qu'**il comporte dans le canal d'air (208) au niveau de la bouche d'entrée (210), un compresseur (274) entraîné en rotation autour de la direction longitudinale X par l'arbre (214).

5. Système de propulsion (150) selon l'une des revendications 1 à 4, **caractérisé en ce qu'**il comporte dans le canal d'air (208) au niveau de la bouche d'éjection (212), une turbine (276) entraînée en rotation autour de la direction longitudinale X par l'arbre (214).

6. Système de propulsion (150) selon la revendication 5, **caractérisé en ce qu'**il comporte au moins une chambre de combustion (702) qui présente une entrée fluidiquement connectée à au moins une sortie d'une chambre à combustible (252) et une sortie fluidiquement connectée au canal d'air (208) en amont de la turbine (276).

7. Système de propulsion (150) selon l'une des revendications 1 à 6, **caractérisé en ce que** le moteur électrique (108) est équipé d'une boîte de vitesse (802) intercalée entre la sortie du moteur et l'arbre (214).

8. Système de propulsion (150) selon l'une des revendications 1 à 7, **caractérisé en ce que** l'arbre (214) est constitué d'un arbre amont solidaire de l'hélice (110) et d'un arbre aval solidaire du moteur électrique (108) et **en ce que** le système de propulsion (150) comporte un dispositif de débrayage (902) monté entre l'arbre aval et l'arbre amont.

9. Système de propulsion (150) selon l'une des revendications 1 à 8, **caractérisé en ce qu'**il comporte une couche thermiquement isolante (271) qui est disposée entre la pile à combustible (250) et le moteur électrique (108).

10. Aéronef (100) comportant un réservoir de combustible (254) et un système de propulsion (150) selon l'une des revendications précédentes, où l'entrée de chaque chambre à combustible (252) est fluidiquement connectée par une canalisation d'apport (256) au réservoir (254).

11. Aéronef (100) selon la revendication 10, **caractérisé en ce que** la canalisation d'apport (256) est en contact avec le moteur électrique (108)

## Patentansprüche

1. Antriebssystem (150) für ein Luftfahrzeug (100), wobei das Antriebssystem (150) umfasst:
- eine Gondel (202), die einen Luftkanal (208) aufweist, der ringförmig um eine Längsrichtung (X) angeordnet ist und vorn an einer Eintrittsöffnung (210) und hinten über eine Ausstoßöffnung (212) mündet,
- einen Elektromotor (108), der im Inneren der Gondel (202) befestigt ist und einen Ausgang, an welchem eine zur Längsrichtung (X) parallele Welle (214) angebracht ist, einen ersten elektrischen Anschluss und einen zweiten elektrischen Anschluss umfasst,
- einen Propeller (110), der, bezogen auf die Eintrittsöffnung (210), vorn angeordnet ist und von der Welle (214) drehend angetrieben wird,
- eine Brennstoffzelle (250), welche umfasst:
- einen Kern (251) um die Längsrichtung (X) herum und außerhalb des Luftkanals (208),
- offene Kanäle (253) um den Kern (251) herum, wobei jeder offene Kanal (253) einen offenen Eingang in den Luftkanal (208) und einen offenen Ausgang in den Luftkanal (208) stromabwärts des offenen Eingangs, bezogen auf die Strömungsrichtung der Luft im Luftkanal (208), aufweist,
- für jeden offenen Kanal (253) eine Brennstoffkammer (252), die mit Brennstoff versorgt wird,
- für jedes aus einem offenen Kanal (253) und einer Brennstoffkammer (252) bestehendes Paar einen Elektrolyten (262) zwischen dem offenen Kanal (253) und der Brennstoffkammer (252),
- zwischen jedem offenen Kanal (253) und dem benachbarten Elektrolyten (262) eine Kathode (264),
- zwischen jeder Brennstoffkammer (252) und dem benachbarten Elektrolyten (262) eine Anode (260), wobei die Anoden (260) mit dem ersten elektrischen Anschluss elektrisch verbunden sind und wobei die Kathoden (264) mit dem zweiten elektrischen Anschluss elektrisch verbunden sind,
wobei jeder offene Kanal (253) eine Fläche des Eingangs aufweist, welche kleiner als die Fläche eines Zwischenbereichs zwischen dem Eingang und dem Ausgang ist, und wobei die Fläche des Ausgangs kleiner als die Fläche des Zwischenbereichs ist.

2. Antriebssystem (150) nach Anspruch 1, **dadurch gekennzeichnet, dass** die offenen Kanäle (253) zueinander koaxiale zylindrische Kanäle um die Längsrichtung X herum sind, dadurch, dass zwischen zwei aufeinander folgenden offenen Kanälen (253) die Brennstoffzelle (250) eine ringförmige Brennstoffkammer (252) umfasst, und dadurch, dass zwischen der Brennstoffkammer (252) und jedem offenen Kanal (253) die Brennstoffzelle (250) einen Elektrolyten (262) umfasst.

3. Antriebssystem (150) nach Anspruch 1, **dadurch gekennzeichnet, dass** die offenen Kanäle (253) nebeneinander angeordnet und um die Längsrichtung X winkelmäßig verteilt sind, und dadurch, dass um jeden offenen Kanal (253) herum die Brennstoffzelle (250) einen ringförmig um die Achse des offenen Kanals (253) angeordneten Elektrolyten (262) und um den Elektrolyten (262) herum eine ringförmig um die Achse des offenen Kanals (253) angeordnete Brennstoffkammer (252) umfasst.

4. Antriebssystem (150) nach einem der Ansprüche 1 bis 3, **dadurch gekennzeichnet, dass** es im Luftkanal (208) an der Eintrittsöffnung (210) einen Kompressor (274) umfasst, der von der Welle (214) um die Längsrichtung X drehend angetrieben wird.

5. Antriebssystem (150) nach einem der Ansprüche 1 bis 4, **dadurch gekennzeichnet, dass** es im Luftkanal (208) an der Ausstoßöffnung (212) eine Turbine (276) umfasst, die von der Welle (214) um die Längsrichtung X drehend angetrieben wird.

6. Antriebssystem (150) nach Anspruch 5, **dadurch gekennzeichnet, dass** es mindestens eine Brennkammer (702) umfasst, welche einen Eingang, der mit mindestens einem Ausgang einer Brennstoffkammer (252) in Fluidverbindung steht, und einen Ausgang, der mit dem Luftkanal (208) stromaufwärts der Turbine (276) in Fluidverbindung steht, aufweist.

7. Antriebssystem (150) nach einem der Ansprüche 1 bis 6, **dadurch gekennzeichnet, dass** der Elektromotor (108) mit einem Getriebe (802) ausgestattet ist, das zwischen dem Ausgang des Motors und der Welle (214) angeordnet ist.

8. Antriebssystem (150) nach einem der Ansprüche 1 bis 7, **dadurch gekennzeichnet, dass** die Welle (214) aus einer stromaufwärtigen Welle, die mit dem Propeller (110) fest verbunden ist, und einer stromabwärtigen Welle, die mit dem Elektromotor (108) fest verbunden ist, besteht, und dadurch, dass das Antriebssystem (150) eine Auskupplungsvorrichtung (902) umfasst, die zwischen der stromabwärtigen Welle und der stromaufwärtigen Welle angebracht ist.

9. Antriebssystem (150) nach einem der Ansprüche 1 bis 8, **dadurch gekennzeichnet, dass** es eine wärmeisolierende Schicht (271) umfasst, welche zwischen der Brennstoffzelle (250) und dem Elektromotor (108) angeordnet ist.

10. Luftfahrzeug (100), welches einen Brennstofftank (254) und ein Antriebssystem (150) nach einem der vorhergehenden Ansprüche umfasst, wobei der Eingang jeder Brennstoffkammer (252) durch eine Zufuhrleitung (256) mit dem Tank (254) in Fluidverbindung steht.

11. Luftfahrzeug nach Anspruch 10, **dadurch gekennzeichnet, dass** die Zufuhrleitung (256) in Kontakt mit dem Elektromotor (108) steht.

## Claims

1. Propulsion system (150) for an aircraft (100), the propulsion system (150) comprising:
- a nacelle (202) having an air channel (208) which is annular around a longitudinal direction (X), and which opens at the front at an inlet opening (210) and at the rear at an ejection opening (212),
- an electric motor (108) fixed inside the nacelle (202) and having an output on which is mounted a shaft (214) parallel to the longitudinal direction (X), a first electrical terminal, and a second electrical terminal,
- a propeller (110) placed in front of the inlet opening (210) and driven in rotation by said shaft (214),
- a fuel cell (250), comprising:
- a core (251) around the longitudinal direction (X) and outside the air channel (208),
- open channels (253) around the core (251), each open channel (253) having an open inlet in the air channel (208) and an open outlet in the air channel (208) downstream of the open inlet, relative to the direction of the air flow in the air channel (208),
- for each open channel (253), a fuel chamber (252) supplied with fuel,
- for each pair consisting of an open channel (253) and a fuel chamber (252), an electrolyte (262) between the open channel (253) and the fuel chamber (252),
- between each open channel (253) and the neighbouring electrolyte (262), a cathode (264),
- between each fuel chamber (252) and the neighbouring electrolyte (262), an anode (260),
the anodes (260) being electrically connected to the first electrical terminal, and the cathodes (264) being electrically connected to the second electrical terminal, each open channel (253) having an inlet surface area which is less than the surface area of an intermediate area between the inlet and the outlet, the surface area of the outlet being smaller than the surface area of the intermediate area.

2. Propulsion system (150) according to Claim 1, **characterized in that** the open channels (253) are cylindrical channels which are coaxial with each other around the longitudinal direction X, **in that**, between two consecutive open channels (253), the fuel cell (150) comprises an annular fuel chamber (252), and **in that**, between the fuel chamber (252) and each open channel (253), the fuel cell (250) comprises an electrolyte (262) .

3. Propulsion system (150) according to Claim 1, **characterized in that** the open channels (253) are placed side by side and distributed angularly around the longitudinal direction X, and **in that**, around each open channel (253), the fuel cell (250) comprises an electrolyte (262) which is annular around the axis of the open channel (253) and, around the electrolyte (262), a fuel chamber (252) which is annular around the axis of the open channel (253).

4. Propulsion system (150) according to any of Claims 1 to 3, **characterized in that** it comprises, at the inlet opening (210) in the air channel (208), a compressor (274) driven in rotation around the longitudinal direction X by the shaft (214).

5. Propulsion system (150) according to any of Claims 1 to 4, **characterized in that** it comprises, at the ejection opening (212) in the air channel (208), a turbine (276) driven in rotation around the longitudinal direction X by the shaft (214).

6. Propulsion system (150) according to Claim 5, **characterized in that** it comprises at least one combustion chamber (702) having an inlet fluidly connected to at least one outlet of a fuel chamber (252) and an outlet fluidly connected to the air channel (208) upstream of the turbine (276).

7. Propulsion system (150) according to any of Claims 1 to 6, **characterized in that** the electric motor (108) is fitted with a gearbox (802) located between the motor output and the shaft (214).

8. Propulsion system (150) according to any of Claims 1 to 7, **characterized in that** the shaft (214) consists of an upstream shaft integral with the propeller (110) and a downstream shaft integral with the electric motor (108), and **in that** the propulsion system (150) comprises a clutch device (902) fitted between the downstream shaft and the upstream shaft.

9. Propulsion system (150) according to any of Claims 1 to 8, **characterized in that** it comprises a thermally insulating layer (271) which is placed between the fuel cell (250) and the electric motor (108).

10. Aircraft (100) comprising a fuel tank (254) and a propulsion system (150) according to any of the preceding claims, wherein the inlet of each fuel chamber (252) is fluidly connected to the tank (254) by a supply line (256) .

11. Aircraft (100) according to Claim 10, **characterized in that** the supply line (256) is in contact with the electric motor (108).
